# EUROPEAN PATENT APPLICATION

(11) **EP 2 395 387 A1**
(43) Date of publication of application: **14.12.2011**
(21) Application number: 10738566.8
(22) Date of filing: 03.02.2010
(51) Int. Cl.: G02C 7/10, D06P 5/00, G02B 1/10, G02C 7/02

(54) **DYED PLASTIC LENS FABRICATION METHOD**

(30) Priority: 09.02.2009 JP 2009027779; 09.02.2009 JP 2009027783
(71) Applicant: Hoya Corporation, Tokyo 161-8525 (JP)
(72) Inventor: MISHINA, Misa, Tokyo 161-8525 (JP); KUBOTERA, Takaaki, Tokyo 161-8525 (JP); MIYAJIMA, Shinya, Tokyo 161-8525 (JP); SAKAI, Yoko, Tokyo 161-8525 (JP); YAMASHITA, Shinichi, Tokyo 161-8525 (JP)
(74) Representative: Beckmann, Claus
(86) International application number: PCT/JP2010/051538
(87) International publication number: WO 2010/090235

(57) **Abstract**

Provided is a process for producing a dyed plastic lens in accordance with which in accordance with which deformation and change in the color of the plastic lens can be suppressed and a plastic lens having a refractive index of 1. 7 or greater and, in particular, a refractive index of 1.7 to 1.8, can be preferably dyed uniformly to a great density without unevenness. Specifically, the process for producing a dyed plastic lens comprises: Step (1) of coating a substrate comprising glass with a sublimation dye; Step (2) of, after placing a plastic lens in a manner such that a face for dyeing of the plastic lens and a face of the substrate coated with the sublimation dye face each other, sublimating the sublimation dye coating the substrate obtained in Step (1) by heating the substrate under a degree of vacuum of 1×10⁴ Pa or smaller to attach the sublimated dye to the face for dyeing of the lens without permeation into the lens; and Step (3) of allowing the sublimation dye attached to the plastic lens to permeate into the lens by treatment of heating the plastic lens having the attached sublimation dye obtained in Step (2). The plastic lens becomes likely to be dyed uniformly without unevenness to a great density by using a plastic lens whose face for dyeing is subjected to treatment with plasma.

## Description

### FIELD OF THE INVENTION

The present invention relates to a process for producing a dyed plastic lens in accordance with the dyeing process with sublimation and, more particularly, to a process for producing a dyed plastic lens, which is divided into two steps of attaching a sublimation dye to a plastic lens and allowing the sublimation dye to permeate into the lens.

### BACKGROUND OF THE INVENTION

Heretofore, dyeing processes such as the dyeing process by dipping, the dyeing process under a pressure and the dyeing process by heating a dye membrane have been utilized for dyeing spectacle plastic lenses. However, in accordance with these processes, it is difficult that uniform dyeing to a great density without unevenness is achieved for plastic lenses having a great refractive index (a refractive index of 1.7 or greater).
To achieve uniform dyeing to a great density without unevenness for a plastic lens having a great refractive index (a refractive index of 1.7 or greater), to date, various attempts such as dyeing in accordance with the dyeing process with sublimation in which the plastic lens is dyed using a sublimation dye have been made. As a process for dyeing a plastic lens using the dyeing process with sublimation, there have been known, for example, a process including heating a printing base obtained by applying a dye to a white paper with a printer to sublimate the dye (see Patent Reference 1), a process including applying a sublimation dye onto a substrate at a predetermined interval to dot the substrate with the sublimation dye and dyeing the substrate with sublimation, in which the area of a range of the sublimation dye to be dotted is set to be equal to or larger than a range to be colored in a plastic lens (see Patent Reference 2), and a process including attaching a sublimation dye to a plastic lens by sublimating the dye while suppressing an increase in temperature of the lens using a cooler, and further dyeing the lens by heat treatment (see Patent Reference 3).
On the other hand, as a process for treating the surface of a lens, there have been disclosed chemical treatment, physical treatment, cleaning treatment, primer treatment, and coating treatment (see Patent Reference 4).

### Prior Art References

### Patent Reference

[Patent Reference 1] JP 2001-59950 A
[Patent Reference 2] JP 2002-82204 A
[Patent Reference 3] JP 2004-69905 A
[Patent Reference 4] JP 2000-111701 A

### SUMMARY OF THE INVENTION

### Problems that the Invention is to Solve

According to studies by the inventors of the present invention, it has been found that, in the process described in Patent Reference 1, there is a problem that heat from a heater is transmitted to a plastic lens, and the temperature distribution of the heat in the heater is directly reflected on the density distribution of a dye in the plastic lens, which makes it impossible to obtain a plastic lens dyed uniformly to a great density. Further, the process is not preferable in the first place because the process involves an environment load caused by the use of a white paper. In the process described in Patent Reference 2, the attachment of a dye to a plastic lens and the permeation thereof are conducted concurrently. According to this process, in the case of using a plastic lens with a particularly great refractive index, the attachment speed of the dye to the plastic lens becomes larger than the permeation speed thereof, which causes crystallization of pigments in the dye on the surface of the lens and renders the dyeing non-uniform. Further, it is necessary to expose the plastic lens to high temperature for a long period of time so as to dye the lens to a great density, and hence, the lens may be deformed or the lens itself may be changed in color. Further, the step of sublimating the dye (step of the attachment of the dye to the plastic lens) and the step of allowing the dye to permeate into the plastic lens are conducted at the same place, and hence, the production efficiency of the lens is low. In the process described in Patent Reference 3, since the vicinity of a cooler is cooled excessively, the sublimated dye may not be attached to the plastic lens uniformly. Further, if the cooler is placed close to the plastic lens so as to suppress the increase in temperature of the lens, the sublimated dye becomes unlikely to be attached to the lens.
Further, the process described in Patent Reference 4 is not a dyeing process with sublimation but a process for providing a lens with a colored layer utilizing an ink discharge mechanism of an inkjet printer, which is a process in which a dye is originally unlikely to permeate into a lens. Further, as a process for treating the surface of a lens, treatment with plasma is also illustrated together with various treatment processes. However, it is merely taught that this treatment is conducted for enhancing the adhesion between the lens and the colored layer, and the effect of treating a lens with plasma in a dyeing process with sublimation is unclear.

The present invention has an object of providing a process for producing a dyed plastic lens in accordance with which deformation and change in the color of the plastic lens can be suppressed and a plastic lens having a refractive index of 1.7 or greater and, in particular, a refractive index of 1.7 to 1.8, can be preferably dyed uniformly to a great density without unevenness.

### Means for Solving the Problems

The inventors of the present invention have earnestly studied the above-mentioned problem, and as a result, have found that the above-mentioned problem can be solved by providing the step of coating a substrate comprising glass with a sublimation dye in a dyeing process with sublimation and by separately providing, in a dyeing step, the step of attaching a dye to a face for dyeing of a plastic lens under particular conditions and the step of allowing the sublimation dye attached to the plastic lens to permeate into the lens. Thus, the inventors of the present invention have achieved the present invention. Further, the inventors of the present invention have found that a plastic lens becomes likely to be dyed uniformly without unevenness to a great density by using a plastic lens whose face for dyeing is subjected to treatment with plasma.

That is, the present invention relates to the following items [1] to [9].
[1] A process for producing a dyed plastic lens, comprising:
   Step (1) of coating a substrate comprising glass with a sublimation dye;
   Step (2) of, after placing a plastic lens in a manner such that a face for dyeing of the plastic lens and a face of the substrate coated with the sublimation dye face each other, sublimating the sublimation dye coating the substrate obtained in Step (1) by heating the substrate under a degree of vacuum of 1×10⁴ Pa or smaller to attach the sublimated dye to the face for dyeing of the lens without permeation into the lens; and
   Step (3) of allowing the sublimation dye attached to the plastic lens to permeate into the lens by treatment of heating the plastic lens having the attached sublimation dye obtained in Step (2).
[2] The process for producing a dyed plastic lens according to the above-mentioned item [1], wherein a distance between the substrate comprising glass and a center of the plastic lens is set to 15 mm to 120 mm in Step (2).
[3] The process for producing a dyed plastic lens according to the above-mentioned item [1] or [2], wherein the heating of the substrate comprising glass in Step (2) is conducted at a temperature set in a manner such that the substrate has a temperature of 120 to 250°C.
[4] The process for producing a dyed plastic lens according to any one of the above-mentioned items [1] to [3], wherein the treatment of heating in Step (3) is conducted under ordinary pressure at a heating temperature of 70 to 160°C for a heating time of 30 seconds to 150 minutes.
[5] The process for producing a dyed plastic lens according to the above-mentioned item [4], wherein the treatment of heating in Step (3) is conducted using a furnace heated previously to the temperature.
[6] the process for producing a dyed plastic lens according to any one of the above-mentioned items [1] to [5], wherein a plastic lens whose face for dyeing is subjected to treatment with plasma is used in Step (2).
[7] The process for producing a dyed plastic lens according to the above-mentioned item [6], wherein conditions of the treatment with plasma are set to a degree of vacuum of 1×10⁴ Pa or smaller and an output of plasma of 40 to 500 W.
[8] The process for producing a dyed plastic lens according to any one of the above-mentioned items [1] to [7], wherein the plastic lens used in Step (2) comprises a homopolymer of a monomer having a sulfide linkage or a copolymer of a monomer having a sulfide linkage and one or more kinds of other monomers.
[9] The process for producing a dyed plastic lens according to any one of the above-mentioned items [1] to [8], wherein a refractive index of the plastic lens used in Step (2) is 1.7 or greater.

### Advantageous Effects of Invention

The process for producing a dyed plastic lens in accordance with which deformation and change in the color of the plastic lens can be suppressed and a plastic lens having a refractive index of 1.7 or greater and, in particular, a refractive index of 1.7 to 1.8, can be preferably dyed uniformly to a great density without unevenness can be provided by the present invention. A dyed plastic lens obtained by the productionprocess is free of deformation and change in color, and is dyed uniformly to a great density even with a refractive index of 1.7 or greater.

### BRIEF DESCRIPTION OF DRAWINGS

[FIG. 1] FIG. 1 is an optical microscope image (magnification: 2,000 times) of a surface (treated surface) of a plastic lens after being subjected to treatment with plasma.
[FIG. 2] FIG. 2 is an optical microscope image (magnification: 2,000times) ofasurface (surface with a sublimation dye attached thereto) of a plastic lens obtained in Step (2).
[FIG. 3] FIG. 3 is an optical microscope image (magnification: 2,000times) of a surface (surfacewitha sublimation dye had attached thereto) of a plastic lens obtained in Step (3).

### Mode for Carrying out the Invention

As described above, the present invention is a process for producing a dyed plastic lens comprising the following Steps (1) to (3) described below.
Step (1): step of coating a substrate comprising glass with a sublimation dye.
Step (2): step of, after placing a plastic lens in a manner such that a face for dyeing of the plastic lens and a face of the substrate coated with the sublimation dye face each other, sublimating the sublimation dye coating the substrate obtained in Step (1) by heating the substrate under a degree of vacuum of 1×10⁴ Pa or smaller to attach the sublimated dye to the face for dyeing of the lens without permeation into the lens.
Step (3): step of allowing the sublimation dye attached to the plastic lens to permeate into the lens by treatment of heating the plastic lens having the attached sublimation dye obtained in Step (2).
Steps (1) to (3) described above will be described successively in the following.

### [Step (1)]

### (Substrate comprising glass)

In Step (1), a substrate comprising glass is coated with a sublimation dye for dyeing a plastic lens. The substrate comprising glass has a low heat conductivity, and is unlikely to undergo a temperature gradient and deformation by heat. The kind of glass for the substrate is not particularly limited, and known glass comprising components such as silicic acid, soda ash, lime, potassium carbonate, lead oxide, and boratic acid can be used.
By using the substrate comprising glass, the temperature gradient is not caused over the entire substrate when the substrate is heated in Step (2) described later, and the substrate temperature is not increased more than necessary. Therefore, excess heat can be prevented from being conducted to an facing plastic lens, and the deformation and change in the color of the plastic lens due to heat can be prevented, and the sublimation dye attached to the lens can be prevented from permeating into the lens.
The thickness of the substrate is not particularly limited as long as heat can be transmitted to the sublimation dye and the dye cane sublimated. Typically, it is preferable that the thickness is 0.5 to 5 mm and more preferably 1 to 3 mm from the standpoint of sufficient sublimation of the sublimation dye.
The face of the substrate facing the plastic lens (the face for coating) may have a curved surface such that little gaps are formed when the substrate is fitted to the curved surface of the plastic lens at the side for dyeing. In this case, the distance between the substrate and the plastic lens becomes approximately constant over the entire curved surface of the lens. Therefore, the sublimated dye is diffused uniformly over the lens, and the uniform dyeing of the plastic lens without unevenness can be facilitated.
It is preferable that the face of the substrate for coating of the sublimation dye is smooth from the standpoint of uniform dyeing of the plastic lens.

### (Sublimation dye)

The sublimation dye used in Step (1) is not particularly limited as long as the dye exhibits the property of sublimation by heating. The sublimation dyes are industrially easily available. Examples of the commercial product include KAYASET BLUE 906 (manufactured by NIPPON KAYAKU Co., Ltd.); KAYASET BROWN 939 (manufactured by NIPPON KAYAKU Co. , Ltd.); KAYASET RED 130 (manufactured by NIPPON KAYAKU Co., Ltd.); KAYALON MICROESTER RED C-LS CONC (manufactured by NIPPON KAYAKU Co., Ltd.); KAYALON MICROESTER RED AQ-LE (manufactured by NIPPON KAYAKU Co., Lid.); KAYALON MICROESTER RED DX-LS (manufactured by NIPPON KAYAKU Co. , Ltd.); DIANIX BLUE AC-E (manufactured by DYSTAR JAPAN Co., Ltd.); DIANIX RED AC-E 01 (manufactured by DYSTAR JAPAN Co., Ltd.); DIANIX YELLOW AC-E NEW (manufactured by DYSTAR JAPAN Co., Ltd.); KAYALON MICROESTER BLUE C-LS CONC (manufactured by NIPPON KAYAKU Co., Ltd.); KAYALON MICROESTER BLUE AQ-LE (manufactured by NIPPON KAYAKU Co., Ltd.); KAYALON MICROESTER YELLOW AQ-LE (manufactured by NIPPON KAYAKU Co. , Ltd.); KAYALON MICROESTER YELLOW C-LS (manufactured by NIPPON KAYAKU Co., Ltd.); and KAYALON MICROESTER BLUE DX-LS CONC (manufactured by NIPPON KAYAKU Co., Ltd.).

When the sublimation dye is applied to the substrate comprising glass, the sublimation dye is dispersed in an aqueous medium to prepare an ink. As the aqueous medium, water is preferable. It is preferable that the concentration of water in the ink of the sublimation dye is adjusted to be 2 to 10% by mass, more preferably 2.5 to 7% by mass, still more preferably 4 to 7% by mass, and particularly preferably 4 to 6% by mass. When the concentration of water in the ink of the sublimation dye is within the above range, the plastic lens can be dyed to a great density.
The ink may comprise surfactants, moisturizers, organic solvents, viscosity modifiers, pH modifiers and binders from the standpoint of dyeing the plastic lens uniformly to a great density.
Examples of the surfactant include anionic surfactants and nonionic surfactants. When the surfactant is added to the ink, it is preferable that an anionic surfactant and a nonionic surfactant are used in combination.
As the anionic surfactant, conventional surfactants can be used. Examples of the anionic surfactant include sodium alkylsulfonates, sodium alkylbenzenesulfonates, sodium α-oleinsulfonates, sodium dodecylphenyl oxide disulfonates and sodium laurylsulfate. The anionic surfactant may be used singly or in combination of two or more.
As the nonionic surfactant, conventional nonionic surfactants can be used. Examples of the nonionic surfactant include ether-based nonionic surfactants such as polyoxyethylene cetyl ether and polyoxyethylene oleyl ether; ester-based nonionic surfactants such as sorbitan stearate and propylene glycol stearate; ether·ester-based nonionic surfactants such as polyoxyethylene glyceryl monostearate and polyoxyethylene sorbitan oleate; and water-soluble polymer-based nonionic surfactants such as polyvinyl alcohol and methylcellulose. The nonionic surfactant may be used singly or in combination of two or more. Among these nonionic surfactants, water-soluble polymer-based nonionic surfactants are preferable, and methylcellulose is more preferable.
When the ink comprises a surfactant, it is preferable that the content of the anionic surfactant in the ink is adjusted to 0.1 to 10% bymass, more preferably 0.2 to 5% by mass and most preferably 0.2 to 1% by mass, and it is preferable that the content of the nonionic surfactant in the ink is adjusted to 0.1 to 10% by mass, more preferably 0.2 to 5% by mass and most preferably 0.2 to 1% by mass. When the contents of the surfactants are within the above respective ranges, the plastic lens can be dyed to a great density more uniformly.
Examples of the moisturizer include pyrrolidone-based moisturizers such as 2-pyrrolidone and N-methyl-2-pyrrolidone; amide-based moisturizers such as dimethyl sulfoxide and imidazolidinone; polyhydric alcohol-based moisturizers such as ethylene glycol, diethylene glycol, triethylene glycol, propylene glycol, dipropylene glycol, D-sorbitol and glycerol; and trimethylolmethane. The moisturizer may be used singly or in combination of two or more. Among these moisturizers, polyhydric alcohol-based moisturizers are preferable, and glycerol is more preferable. When the ink comprises the moisturizer, it is preferable that the content of the moisturizer in the ink is adjusted to 5 to 30% by mass and more preferably 10 to 25% by mass. When the content of the moisturizer is within the above range, the plastic lens can be dyed to a great density more uniformly.
The process for applying the sublimation dye to the substrate comprising glass is not particularly limited. Examples of the process include the spray coating process, the bar coating process, the roll coating process, the spin coating process, the ink dot coating process and the ink jet process.

### [Step (2)]

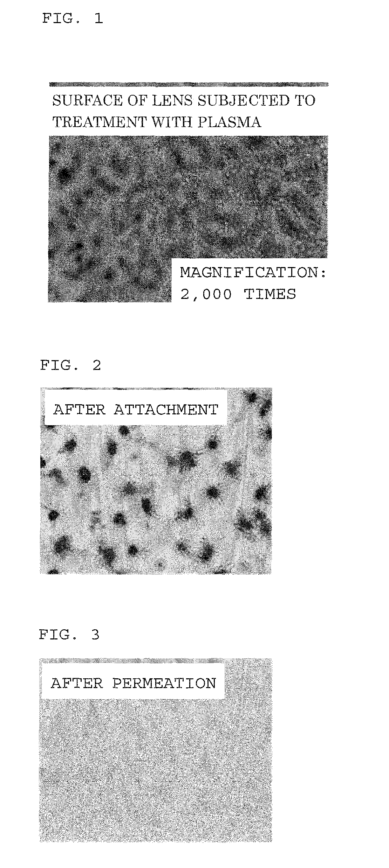

In Step (2), the plastic lens is placed in a manner such that the face for dyeing of the lens and the face of the substrate coated with the sublimation dye face each other. The placement of the plastic lens and the substrate can be conducted in a manner conducted in conventional dyeing processes with sublimation. For example, Figures 1 and 2 inJP 2005-156630 A can be referred to. It is preferable that the distance between the substrate and the central point of the plastic lens is 5 to 120 mm, more preferably 10 to 80 mm and most preferably 15 to 30 mm from the standpoint of dyeing the plastic lens to a great density.

### (Plastic lens)

The raw material of the plastic lens used in Step (2) is not particularly limited. Examples of the raw material of the plastic lens include homopolymers of monomers having sulfide linkage; copolymers of monomers having sulfide linkage and one or more kinds of other monomers; homopolymers of methyl methacrylate; copolymers of methyl methacrylate and one or more kinds of other monomers; homopolymers of diethylene glycol bisallylcarbonate; copolymers of diethylene glycol bisallylcarbonate and one or more kinds of other monomers; acrylonitrile-styrene copolymers; copolymers having a halogen; polycarbonates; polystyrene; polyvinyl chloride; unsaturated polyesters; polyethylene terephthalate; polyurethanes; polythiourethanes; and epoxy resins. Among these raw materials, homopolymers of monomers having sulfide linkage and copolymers of monomers having sulfide linkage and one or more kinds of other monomers are preferable from the standpoint of obtaining a refractive index of 1.7 or greater.
Further, the shape of the plastic lens is not particularly limited. Plastic lenses having various curved surfaces can be used. For example, plastic lenses having spherical surfaces, non-spherical surfaces such as rotationally symmetric non-spherical surfaces, surfaces of multi-focus lenses and toric surfaces, convex surfaces and concave surfaces can be used.

### (Treatment with plasma)

Further suppression of the crystallization of pigments in the sublimation dye attached to the surface of the lens can be achieved by treating the plastic lens with plasma on the face for dyeing. The reason for obtaining the effect is considered as follows. An organic substance (see FIG. 1) attached to the surface of the lens is removed by the treatment with plasma, and consequently, the affinity between the surface of the lens and the pigments becomes satisfactory.
As the treatment method of the surface of a lens used conventionally, there are known, for example, polishing treatment with an abrasive such as alumina and alkali treatment with caustic soda or the like. Considering that the adhesion between a coating film and a base is obtained, an effect similar to that of the treatment with plasma should be expected even in these treatment methods. However, actually, the abrasive and the alkali solution cannot be removed completely. Therefore, it was found that when the polishing treatment, alkali treatment, or the like is applied instead of the treatment with plasma of the face for dyeing of a lens in the present invention, a residue is attached to the lens, and consequently, unevenness of dyeing due to the crystallization of pigments in the sublimation dye occurs, which makes it impossible to dye the lens uniformly (see Comparative Examples 1 to 3 in the present specification). Further, the inventors of the present invention considered that there are no problems as long as a residue is not attached to a plastic lens after surface treatment and attempted to conduct another surface treatment method such as UV ozone treatment. However, it was found that the surface of a lens cannot be treated uniformly and density unevenness may occur consequently when the lens is dyed (see Comparative Example 4 in the present specification) . Further, when an output was increased in the treatment, there arose a problem in that UV irradiation affected the plastic lens to be yellowed.

The treatment with plasma can be conducted utilizing a conventional apparatus for the treatment with plasma. It is preferable that the output of plasma in the treatment with plasma is 40 to 500 W, more preferably 50 to 500 W, still more preferably 50 to 300 W, still more preferably 100 to 300 W and most preferably 200 to 300 W from the standpoint of suppressing unevenness in dyeing and the transmittance. The degree of vacuum is 1×10⁴ Pa or smaller, preferably an approximate vacuum (1×10⁻³ to 1×10⁴ Pa), more preferably 1×10⁻³ to 1×10³ Pa and most preferably 1×10⁻² to 2×10² Pa. When the output of plasma and the degree of vacuum are within the above ranges, the sufficient surface treatment can be achieved, and the phenomenon characteristic in the dyeing process with sublimation that pigments are crystallized at the surface of the lens when the sublimation dye is sublimated can be more effectively suppressed and unevenness is hardly observed even with a microscope (for example, a magnification of 2,000 times). Further, the load on the lens can also be minimized concurrently, and hence, the deformation and change in the color of the lens itself can be suppressed.
The present invention is useful since a plastic lens with a refractive index of 1.7 or greater (preferably 1.7 to 1.8, more preferably, 1.70 to 1.76) can also be used.

### (Sublimation of sublimation dye and attachment thereof to plastic lens)

As described above, by placing the plastic lens in a manner such that the face for dyeing of the lens and the face of the substrate coated with the sublimation dye face each other, and thereafter, heating the substrate coated with the sublimation dye under a degree of vacuum of 1×10⁴ Pa or smaller, the sublimation dye applied to the substrate is sublimated and the sublimated dye is attached to the face for dyeing of the plastic lens without allowing the dye to permeate into the plastic lens. Herein, "without allowing the dye to permeate into the plastic lens" means that preferably by 90% by mass or more, more preferably 95% by mass or more, and still more preferably substantially 100% by mass of the dye is not allowed to permeate into the plastic lens.
A preferable example of a process for heating the substrate coated with the sublimation dye is a process for heating the substrate from a side not coated with the sublimation dye with a heater. The heating temperature of the substrate is adjusted in a manner such that the temperature of the substrate becomes 120 to 250°C, more preferably 130 to 240°C, more preferably 140 to 230°C, and still more preferably 140 to 200°C.
By setting the heating temperature of the substrate within the above range, the sublimation dye can be sublimated sufficiently, the deformation and change in the color of the facing plastic lens due to heat can be suppressed, and the dye attached to the plastic lens can be prevented from permeating into the lens. In the case of the condition under which the dye attached to a plastic lens permeates into the lens, with a plastic lens having a refractive index of 1.7 or greater, which is particularly unlikely to be dyed, the speed at which the sublimation dye is attached to the lens tends to be higher than the speed at which the sublimation dye permeates into the lens, and pigments in the sublimation dye may be crystallized on the surface of the lens, which causes non-uniform dyeing (unevenness). In the present invention, the suppression of unevenness has been achieved by dividing the dyeing step into Step (2) and Step (3) while using a substrate comprising glass. Although the degree of vacuum at a time of heating of the substrate is 1×10⁴ Pa or smaller, the degree of vacuum is preferably substantially an approximate vacuum (degree of vacuum: 1×10⁻³ to 1×10⁴ Pa), more preferably 1×10⁻² to 1×10³ Pa, and still more preferably 1×10⁻² to 5×10² Pa from the standpoint of suppressing pigments in the sublimation dye from being crystallized on the surface of the lens. In the case of setting the pressure to be less than 1×10⁻³ Pa, it is necessary to enhance the performance of an apparatus.
The surface of the lens to which the sublimation dye is attached is in a state as shown in FIG. 2.

### [Step (3)]

### (Permeation of sublimation dye into plastic lens)

In Step (3), the plastic lens with the sublimation dye attached thereto obtained in Step (2) is heat-treated, and thus, the sublimation dye attached to the surface of the lens is allowed to permeate into the plastic lens.
From the standpoint of allowing the sublimation dye to permeate into the plastic lens sufficiently and suppressing the deformation and change in the color of the plastic lens, the heat-treatment temperature is generally 70 to 160°C, preferably 80 to 160°C, more preferably 100 to 160°C, still more preferably 120 to 160°C, and most preferably 135 to 160°C, although the condition may vary also depending upon the type of the plastic lens. In particular, in the case of using a plastic lens with a refractive index of 1.7 or greater, by heat-treating the plastic lens particularly at 100 to 160°C, preferably 120 to 160°C, the sublimation dye is allowed to permeate into the plastic lens sufficiently. The surface of the lens after the sublimation dye has permeated into the plastic lens, the state as shown in FIG. 3 is obtained.
Although the heat-treatment may be conducted under a reduced pressure or under pressure, the heat-treatment is preferably conducted under ordinary pressure. Although the condition may vary depending upon the type of the plastic lens in the same way as the above, the heat-treatment time is preferably 30 seconds to 150 minutes, more preferably 1 minute to 150 minutes, still more preferably 15 minutes to 150 minutes, still more preferably 20 minutes to 120 minutes, and still more preferably 40 minutes to 120 minutes.

As the heat-treatment in Step (3), in order to allow the sublimation dye to permeate into the plastic lens uniformly, it is preferable to adopt a process of placing the plastic lens with the sublimation dye attached thereto obtained in Step (2) in a furnace (for example, an oven) heated previously to the above temperature range.

### (Characteristics of dyed plastic lens)

The transmittance of the dyed plastic lens dyed as described above is 86% or smaller, and 80% or smaller, 55% or smaller, 45% or smaller, and further 35% or smaller depending upon the production condition, and even a plastic lens with a refractive index of 1.7 or greater comprises a sublimation dye in a great concentration. Further, the dyed plastic lens obtained by the production process of the present invention is uniformly dyed to a great densityuniformly without unevenness.

### Examples

The present invention will be described more specifically with reference to examples in the following. However, the present invention is not limited to the examples. The evaluation of the appearance and the measurement of the transmittance of the dyed plastic lenses obtained were conducted as described in the following.

### (i) Appearance (optical microscope): uneven dyeing

The presence or the absence of uneven dyeing and unevenness of dyeing due to crystallization of pigments in a sublimation dye was examined using an optical microscope at a magnification of 2,000 times and evaluated in accordance with the following criterion for evaluation.
- Criterion for the evaluation -
○: no unevenness of dyeing found even with an optical microscope.
△: some uneven dyeing found by with an optical microscope.
×: a lot of uneven dyeing found with an optical microscope.

### (ii) Appearance (direct observation with eyes): uneven dyeing

The presence or the absence of uneven dyeing and unevenness of dyeing due to crystallization of pigments in a sublimation dye was examined under a fluorescent light by the direct observation with eyes and evaluated in accordance with the following criterion.
- Criterion for the evaluation -
○: difficult to find any unevenness of dyeing by direct observation with eyes.
×: uneven dyeing found in a lens plane by direct observation with eyes.

### (iii) Appearance: deformation of lens

Whether or not the deformation of a lens occurred was examined by direct observation with eyes and evaluated in accordance with the following criterion.
- Criterion for the evaluation -
○: no deformation (no deformation of a lens found.)
×: there is deformation (some deformation of a lens found.)

### (iv) Transmittance

The transmittance of visual light at a wavelength of 585 nm was measured using a spectrophotometer "U3410" (manufactured by HITACHI Ltd.). The smaller the transmittance, the greater the density of dyeing.

The following plastic lens was used in each example.

### (Plastic lens)

"EYRY" (a trade name; manufactured by HOYA Corporation); a plastic lens having polysulfide linkage; the refractive index: 1.70; the thickness at the center: 1.8 mm; the dioptric power of the lens: 0.00; the diameter: 80 mm

### <Preparation Example 1>

### (Preparation of an ink comprising a sublimation dye)

"DIANIX BLUE AC-E" (manufactured by DYSTAR JAPAN Co., Ltd.) as the sublimation dye was dispersed inwater. Ananionic surfactant, a nonionic surfactant and a moisturizer were mixed with the obtained dispersion, and an ink comprising a sublimation dye was prepared. The relative amounts of the components were as follows:
The sublimation dye / water / the anionic surfactant / the nonionic surfactant / the moisturizer = 5 / 74.55 / 0.25 / 0.2 /20 (the ratio by mass)

### <Example 1>

### Treatment with plasma

The face for dyeing of the plastic lens was treated with plasma under the following condition.
- Condition of treatment with plasma -
Apparatus for the treatment with plasma: PC101A (manufactured by YAMATO SCIENTIFIC Co., Ltd.)
Degree of vacuum: 1×10² Pa
Output of plasma: 130 W
Time of treatment: 120 seconds
The state of the surface of the plastic lens after the treatment with plasma was examined with an optical microscope (magnification: 2,000 times), and it was confirmed that the surface subjected to the treatment with plasma exhibited a fine uniform pattern as shown in FIG. 1.

### Step (1):

The ink comprising a sublimation dye obtained in Preparation Example 1 was applied onto a substrate comprising glass at points forming a grid using a dispenser.

### Step (2) :

The obtained glass substrate was placed in a dyeing apparatus by sublimation in a manner such that the glass substrate faced the plastic lens and was separated from the center of the plastic lens by 20 mm. The degree of vacuum was adjusted at 2×10² Pa. The sublimation dye was sublimated over 10 minutes by heating in a manner such that the temperature of the glass substrate was 155°C, and the sublimation dye was attached to the plastic lens.

### Step (3):

Further, the obtained plastic lens was placed in an oven heated at 130°C and heated for 1 hour in a manner such that the sublimation dye was allowed to permeate into the inside of the plastic lens.

Tables 1 and 2 show the results of the evaluation of the appearance and the transmittance measurement of the obtained dyed plastic lens.

### <Example 2>

An experiment was conducted in the same way as in Example 1, except for changing the degree of vacuum at the time of treatment with plasma in Example 1 to 2×10² Pa. Table 1 shows the results of the evaluation of the appearance and the transmittance measurement of the obtained dyed plastic lens.

### <Example 3>

An experiment was conducted in the same way as in Example 1, except for changing the output of plasma at the time of treatment with plasma in Example 1 to 50 W. Table 1 shows the results of the evaluation of the appearance and the transmittance measurement of the obtained dyed plastic lens.

### <Examples 4>

An experiment was conducted in the same way as in Example 1, except for changing the output of plasma at the time of treatment with plasma in Example 1 to 260 W. Table 1 shows the results of the evaluation of the appearance and the transmittance measurement of the obtained dyed plastic lens.

### <Example 5>

An experiment was conducted in the same way as in Example 1, except for changing the degree of vacuum in Step (2) in Example 1to 5×10² Pa. Table 1 shows the results of the evaluation of the appearance and the transmittance measurement of the obtained dyed plastic lens.

### <Comparative Example 1> Polishing treatment

An experiment was conducted in the same way as in Example 1, except for conducting, instead of the treatment with plasma in Example 1, polishing treatment with an abrasive "POLIPLA203H" (trade name, manufactured by Fujimi Incorporated) with an average particle diameter of 1 to 3 µm.
The obtained dyed plastic lens had uneven dyeing due to the crystallization of pigments in the sublimation dye and was not dyed uniformly. Table 1 shows the results.

### <Comparative Example 2> Alkali treatment

An experiment was conducted in the same way as in Example 1, except for conducting, instead of the treatment with plasma in Example 1, alkali treatment in which the plastic lens was soaked in a 10% caustic soda aqueous solution and treating the lens at 60°C for 5 minutes.
The obtained dyed plastic lens had uneven dyeing due to the crystallization of pigments in the sublimation dye and was not dyed uniformly. Table 1 shows the results.

### <Comparative Example 3> Organic solvent treatment

An experiment was conducted in the same way as in Example 1, except for conducting, insteadof the treatment with plasma in Example 1, organic solvent treatment of soaking the plastic lens in acetone for 5 minutes.
The obtained dyed plastic lens had uneven dyeing due to the crystallization of pigments in the sublimation dye and was not dyed uniformly. Table 1 shows the results.

### <Comparative Example 4> UV ozone treatment

An experiment was conducted in the same way as in Example 1, except for conducting, instead of the treatment with plasma in Example 1, UV ozone treatment under the following condition.
- UV ozone treatment condition -
UV ozone treatment apparatus: EYE UV-ozone cleaning apparatus "OC-250315-D+A" (Model, manufactured by Iwasaki Electric Co., Lid.)
Output: 75 W
Treatment time: 60 seconds
The obtained dyed plastic lens had uneven dyeing due to the crystallization of pigments in the sublimation dye, and was not dyed uniformly. Table 1 shows the results.

[Table 1]

**Table 1**

| | Evaluation of appearance Uneven dyeing | | Transmittance (%) |
|---|---|---|---|
| | Direct observation with eyes | Microscope | |
| Example 1 | ○ | △ | 51.8 |
| Example 2 | ○ | △ | 45.7 |
| Example 3 | ○ | △ | 52.1 |
| Example 4 | ○ | △ | 44.5 |
| Example 5 | ○ | △ | 51.8 |
| Comparative Example 1 | × | × | - |
| Comparative Example 2 | × | × | - |
| Comparative Example 3 | × | × | - |
| Comparative Example 4 | × | × | - |

Table 1 shows that the dyed plastic lens with a refractive index of 1.70 produced according to the present invention was dyed uniformly to a great density.
On the other hand, in the case where the surface of the plastic lens was treated by other means, the plastic lens was not able to be dyed uniformly because of crystallization of pigments in the sublimation dye on the surface of the plastic lens or the like (Comparative Examples 1 to4).

### <Example 6>

An experiment was conducted in the same way as in Example 1, except for adjusting the temperature of the glass substrate in Step (2) in Example 1 to 127°C. Table 2 shows the results of the evaluation of the appearance and the transmittance measurement of the obtained dyed plastic lens.

### <Example 7>

An experiment was conducted in the same way as in Example 1, except for adjusting the temperature of the glass substrate in Step (2) in Example 1 to 190 °C. Table 2 shows the results of the evaluation of the appearance and the transmittance measurement of the obtained dyed plastic lens.

### <Example 8>

An experiment was conducted in the same way as in Example 1, except for changing the temperature of the oven in Step (3) in Example 1 to 80°C. Table 2 shows the results of the evaluation of the appearance and the transmittance measurement of the obtained dyed plastic lens.

### <Example 9>

An experiment was conducted in the same way as in Example 1 except for changing the temperature of the oven in Step (3) in Example 1 to 140°C. Table 2 shows the results of the evaluation of the appearance and the transmittance measurement of the obtained dyed plastic lens.

### <Example 10>

An experiment was conducted in the same way as in Example 1, except for changing the heat-treatment time in Step (3) in Example 1 to 1 minute. Table 2 shows the results of the evaluation of the appearance and the transmittance measurement of the obtained dyed plastic lens.

### <Example 11>

An experiment was conducted in the same way as in Example 1 except for adjusting the temperature of the glass substrate in Step (2) in Example 1 to 230°C. Table 2 shows the results of the evaluation of the appearance and the transmittance measurement of the obtained dyed plastic lens.

### <Comparative Example 5>

An experiment was conducted in the same way as in Example 1, except for using an aluminum substrate instead of the substrate comprising glass in Example 1 and sublimating the sublimation dye over 10 minutes in Step (2).
Table 2 shows the results of the evaluation of the appearance of the obtained dyed plastic lens.

### <Comparative Example 6>

An experiment was conducted in the same way as in Example 7, except for using an aluminum substrate instead of the substrate comprising glass, continuing to heat the aluminum substrate even after the completion of the attachment of the sublimation dye in Step (2) to provide heat to the plastic lens, thereby allowing the sublimation dye to permeate into the lens (total heating time: 30 minutes), and not conducting Step (3) in Example 7.
Table 2 shows the results of the evaluation of the appearance of the obtained dyed plastic lens.

[Table 2]

**Table 2**

| | Evaluation of appearance | | Transmittance (%) |
|---|---|---|---|
| | Uneven dyeing (Direct observation with eyes) | Deformation of lens | |
| Example 1 | ○ | ○ | 51.8 |
| Example 6 | ○ | ○ | 86.0 |
| Example 7 | ○ | ○ | 47.3 |
| Example 8 | ○ | ○ | 78.2 |
| Example 9 | ○ | ○ | 33.9 |
| Example 10 | ○ | ○ | 80.0 |
| Example 11 | ○ | ○ | 42.9 |
| Comparative Example 5 | × | ○ | - |
| Comparative Example 6 | × | × | - |

Table 2 shows that the dyed plastic lens with a refractive index of 1.70 produced according to the present invention was dyed uniformly to a great density without any deformation.
On the other hand, when a dyeing process with sublimation was conducted using a metal substrate according to the conventional process as in Comparative Examples 5 and 6, some pigments permeated into the lens, and uniform dyeing was not able to be conducted. Further, when an attempt was made so as to allow the sublimation dye to permeate into the plastic lens by the operation of Step (2) without providing Step (3) as in Comparative Example 6, since a plastic lens with a great refractive index, which was unlikely to be dyed, was used, pigments in the dye were crystallized, and uniform dyeing was not able to be conducted. In addition, it was necessary to conduct heating for a long period of time for dyeing, which caused the deformation of the lens.

### INDUSTRIAL APPLICABILITY

The dyed plastic lens obtained in accordance with the production process of the present invention is widely used as spectacles, sunglasses and goggles and, in particular, useful as the plastic lens for spectacles having a great refractive index of 1.7 or greater.

## Claims

1. A process for producing a dyed plastic lens, comprising:
Step (1) of coating a substrate comprising glass with a sublimation dye;
Step (2) of, after placing a plastic lens in a manner such that a face for dyeing of the plastic lens and a face of the substrate coated with the sublimation dye face each other, sublimating the sublimation dye coating the substrate obtained in Step (1) by heating the substrate under a degree of vacuum of 1×10⁴ Pa or smaller to attach the sublimated dye to the face for dyeing of the lens without permeation into the lens; and
Step (3) of allowing the sublimation dye attached to the plastic lens to permeate into the lens by treatment of heating the plastic lens having the attached sublimation dye obtained in Step (2).

2. The process for producing a dyed plastic lens according to claim 1, wherein a distance between the substrate comprising glass and a center of the plastic lens is set to 15 mm to 120 mm in Step (2).

3. The process for producing a dyed plastic les according to claim 1 or 2, wherein the heating of the substrate comprising glass in Step (2) is conducted at a temperature set in a manner such that the substrate has a temperature of 120 to 250°C.

4. The process for producing a dyed plastic lens according to any one of claims 1 to 3, wherein the treatment of heating in Step (3) is conducted under ordinary pressure at a heating temperature of 70 to 160°C for a heating time of 30 seconds to 150 minutes.

5. The process for producing a dyed plastic lens according to claim 4, wherein the treatment of heating in Step (3) is conducted using a furnace heated previously to the temperature.

6. The process for producing a dyed plastic lens according to any one of claims 1 to 5 wherein a plastic lens whose face for dyeing is subjected to treatment with plasma is used in Step (2).

7. The process for producing a dyed plastic lens according to claim 6, wherein conditions of the treatment with plasma are set to a degree of vacuum of 1×10⁴ Pa or smaller and an output of plasma of 40 to 500 W.

8. The process for producing a dyed plastic lens according to any one of claims 1 to 7, wherein the plastic lens used in Step (2) comprises a homopolymer of a monomer having a sulfide linkage or a copolymer of a monomer having a sulfide linkage and one or more kinds of other monomers.

9. The process for producing a dyed plastic lens according to any one of claims 1 to 8, wherein a refractive index of the plastic lens used in Step (2) is 1.7 or greater.
